(19) Europäisches Patentamt
European Patent Office
Office européen des brevets

(11) **EP 4 597 648 A1**

(12) **EUROPEAN PATENT APPLICATION**
published in accordance with Art. 153(4) EPC

(43) Date of publication:
**06.08.2025  Bulletin 2025/32**

(21) Application number: **23871328.3**

(22) Date of filing: **22.06.2023**

(51) International Patent Classification (IPC):
*H01M 8/0245* (2016.01)    *H01M 4/86* (2006.01)
*H01M 8/0232* (2016.01)    *H01M 8/0236* (2016.01)
*H01M 8/12* (2016.01)

(52) Cooperative Patent Classification (CPC):
**H01M 4/86; H01M 8/0232; H01M 8/0236;**
**H01M 8/0245; H01M 8/12;** Y02E 60/50

(86) International application number:
**PCT/JP2023/023101**

(87) International publication number:
**WO 2024/070083 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.09.2022  JP 2022155330**

(71) Applicant: **SUMITOMO ELECTRIC INDUSTRIES,
LTD.**
**Osaka-shi, Osaka 541-0041 (JP)**

(72) Inventors:
• **NUMATA, Koma**
**Osaka-shi, Osaka 541-0041 (JP)**
• **HOSOE, Akihisa**
**Osaka-shi, Osaka 541-0041 (JP)**

(74) Representative: **Boult Wade Tennant LLP
Salisbury Square House
8 Salisbury Square
London EC4Y 8AP (GB)**

(54) **POROUS BODY, POROUS COLLECTOR, AND SOLID OXIDE FUEL CELL COMPRISING SAME**

(57)    A porous body includes a first framework having a three-dimensional mesh structure, wherein the first framework consists of a framework main body and an inner portion that is hollow and that is surrounded by the framework main body, the framework main body consists of a first layer and a second layer, the first layer is located on an outer surface side of the framework main body, the second layer is located on the inner portion side of the framework main body, the framework main body contains 70 mass% or more of nickel and cobalt in total, a cobalt content ratio in the first layer is 50 mass% or more, a cobalt content ratio in the second layer is less than 50 mass%, and a ratio of a thickness of the first layer to a thickness of the framework main body is 10% or more and 90% or less.

FIG.1

EP 4 597 648 A1

**Description**

TECHNICAL FIELD

The present disclosure relates to a porous body, a porous current collector, and solid oxide fuel cells including them. The present application claims priority based on Japanese Patent Application No. 2022-155330 filed on September 28, 2022. The entire contents of the Japanese Patent Application are incorporated herein by reference.

BACKGROUND ART

Conventionally, each of a porous body containing nickel and cobalt and a porous current collector produced using the porous body has been used for a solid oxide fuel cell (PTL 1).

CITATION LIST

PATENT LITERATURE

PTL 1: Japanese National Patent Publication No. 2017-507452

SUMMARY OF INVENTION

A porous body according to one embodiment of the present disclosure includes a first framework having a three-dimensional mesh structure, wherein

the first framework consists of a framework main body and an inner portion that is hollow and that is surrounded by the framework main body,
the framework main body consists of a first layer and a second layer,
the first layer is located on an outer surface side of the framework main body,
the second layer is located on the inner portion side of the framework main body,
the framework main body contains 70 mass% or more of nickel and cobalt in total,
a cobalt content ratio in the first layer is 50 mass% or more,
a cobalt content ratio in the second layer is less than 50 mass%, and
a ratio of a thickness of the first layer to a thickness of the framework main body is 10% or more and 90% or less.

BRIEF DESCRIPTION OF DRAWINGS

Fig. 1 is a schematic partial cross sectional view schematically showing a partial cross section of a porous body according to one embodiment of the present disclosure.
Fig. 2 is a cross sectional view along a line II-II of Fig. 1.
Fig. 3 is a schematic partial cross sectional view schematically showing a partial cross section of a porous current collector according to one embodiment of the present disclosure.
Fig. 4 is a cross sectional view along a line IV-IV of Fig. 3.
Fig. 5 is a schematic cross sectional view showing an exemplary solid oxide fuel cell of an embodiment.
Fig. 6 is a schematic cross sectional view showing another exemplary solid oxide fuel cell of the embodiment.
Fig. 7 is a schematic diagram showing a method of measuring a value of area specific resistance.

DETAILED DESCRIPTION

[Problem to be Solved by the Present Disclosure]

When a porous body containing nickel and cobalt is used for a solid oxide fuel cell, oxidation of the porous body proceeds due to its use, thereby forming a porous current collector containing an oxide having a spinel structure. Such an oxide having the spinel structure imparts excellent electrical conductivity (conductivity) to the porous current collector. On the other hand, the thermal expansion coefficient of the oxide having the spinel structure tends to be higher than the thermal expansion coefficient of a cell for fuel cell in the solid oxide fuel cell. Therefore, in the solid oxide fuel cell, cracking may occur in the cell for fuel cell due to a difference in thermal expansion coefficient between the porous current collector and the cell for fuel cell in contact with the porous current collector. Therefore, it has been required to achieve both suppression of cracking of the cell for fuel cell and excellent conductivity of the porous current collector in the solid oxide fuel cell.

In view of the above, an object of the present disclosure is to provide a porous body, a porous current collector, and solid oxide fuel cells including them so as to achieve both suppression of cracking of a cell for fuel cell and excellent conductivity of the porous current collector in the solid oxide fuel cell.

[Advantageous Effect of the Present Disclosure]

According to the present disclosure, it is possible to provide a porous body, a porous current collector, and solid oxide fuel cells including them so as to achieve both suppression of cracking of a cell for fuel cell and excellent conductivity of the porous current collector in the solid oxide fuel cell.

[Description of Embodiments]

First, embodiments of the present disclosure will be listed and described.

[1] A porous body according to one embodiment of the present disclosure includes a first framework having a three-dimensional mesh structure, wherein

the first framework consists of a framework main body and an inner portion that is hollow and that is surrounded by the framework main body,
the framework main body consists of a first layer and a second layer,
the first layer is located on an outer surface side of the framework main body,
the second layer is located on the inner portion side of the framework main body,
the framework main body contains 70 mass% or more of nickel and cobalt in total,
a cobalt content ratio in the first layer is 50 mass% or more,
a cobalt content ratio in the second layer is less than 50 mass%, and
a ratio of a thickness of the first layer to a thickness of the framework main body is 10% or more and 90% or less.

The porous body according to one embodiment of the present disclosure can achieve both suppression of cracking of a cell for fuel cell and excellent conductivity of a porous current collector in a solid oxide fuel cell.
[2] A solid oxide fuel cell according to one embodiment of the present disclosure includes the porous body according to [1]. Thus, the solid oxide fuel cell is less likely to be cracked and can have excellent output performance.
[3] A porous current collector according to one embodiment of the present disclosure includes a second framework having a three-dimensional mesh structure, wherein

the second framework consists of a framework main body and an inner portion that is hollow and that is surrounded by the framework main body,
the framework main body consists of a first region and a second region,
the first region is located on an outer surface side of the framework main body,
the second region is located on the inner portion side of the framework main body,
the framework main body contains 90 mass% or more of nickel, cobalt, and oxygen in total,
the first region has 80 volume% or more of a spinel structure,
the second region has 80 volume% or more of a lamellar rock salt type structure,
a ratio of a thickness of the first region to a thickness of the framework main body is 10% or more and 90% or less.

The porous current collector according to one embodiment of the present disclosure can achieve both suppression of cracking of a cell for fuel cell and excellent conductivity of the porous current collector in a solid oxide fuel cell.
[4] In [3], a cobalt content ratio in the first region is 50 mass% or more, and
a cobalt content ratio in the second region is less than 50 mass%. Thus, in the solid oxide fuel cell, the cracking of the cell for fuel cell can be further suppressed, and the porous current collector can have more excellent conductivity.
[5] A solid oxide fuel cell according to one embodiment of the present disclosure includes the porous current collector according to [3] or [4]. Thus, the solid oxide fuel cell is less likely to be cracked and can have excellent output performance.

[Details of Embodiments of the Present Disclosure]

Specific examples of the porous body, the porous current collector, and the solid oxide fuel cells including them according to one embodiment (hereinafter, also referred to as the "present embodiment") of the present disclosure will be described below with reference to figures. The same reference characters indicate the same or corresponding portions in the figures of the present disclosure. Further, a relation of a dimension such as a length, a width, a thickness, or a depth is modified as appropriate for clarity and brevity of the figures and does not necessarily represent an actual dimensional relation.

In the present specification, the expression "A to B" represents a range of lower to upper limits (i.e., A or more and B or less), and when no unit is indicated for A and a unit is indicated only for B, the unit of A is the same as the unit of B.

When a compound or the like is expressed by a chemical formula in the present specification and an atomic ratio is not particularly limited, it is assumed that all the conventionally known atomic ratios are included, and the atomic ratio should not be necessarily limited only to one in the stoichiometric range.

[First Embodiment: Porous Body]

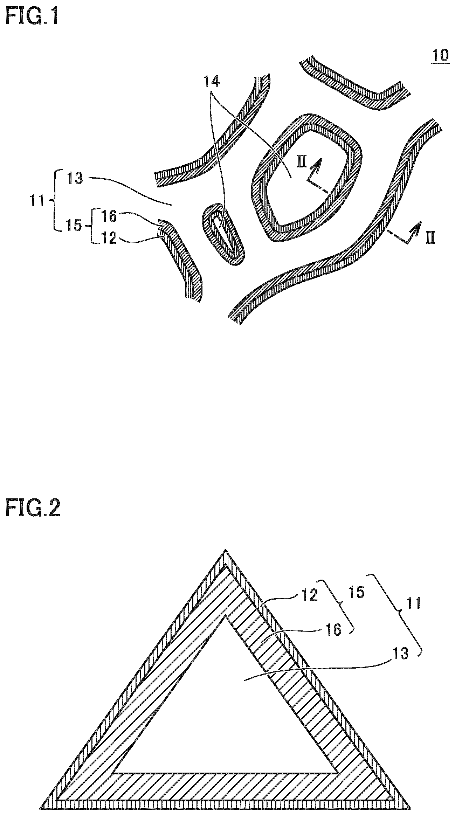

A porous body 10 according to one embodiment of the present disclosure will be described with reference to Figs. 1 and 2.

In one embodiment of the present disclosure (hereinafter, also referred to as the "present embodiment"), porous body 10 includes a first framework 11 having a three-dimensional mesh structure, wherein

first framework 11 consists of a framework main body 15 and an inner portion 13 that is hollow and that is surrounded by framework main body 15,
framework main body 15 consists of a first layer 12 and a second layer 16,
first layer 12 is located on an outer surface side of framework main body 15,
second layer 16 is located on the inner portion 13 side of framework main body 15,
framework main body 15 contains 70 mass% or more of nickel and cobalt in total,
a cobalt content ratio in first layer 12 is 50 mass% or more,
a cobalt content ratio in second layer 16 is less than 50 mass%, and
a ratio of a thickness of first layer 12 to a thickness of framework main body 15 is 10% or more and 90% or less.

Porous body 10 of the present disclosure can achieve both suppression of cracking of a cell 100 for fuel cell and excellent conductivity of a porous current collector 20 in a solid oxide fuel cell. This is presumably due to the following reasons.

(a1) Porous body 10 of the present disclosure includes first framework 11 having a three-dimensional mesh structure, first framework 11 consists of framework main body 15 and inner portion 13 that is hollow and that is surrounded by framework main body 15, framework main body 15 consists of first layer 12 and second layer 16, first layer 12 is located on the outer surface side of framework main body 15, second layer 16 is located on the inner portion 13 side of framework main body 15, framework main body 15 contains 70 mass% or more of nickel and cobalt in total, and the cobalt content ratio in first layer 12 is 50 mass% or more. When solid oxide fuel cell 150 including porous body 10 is operated, porous body 10 is heated to cause nickel and cobalt in framework main body 15 to react with oxygen in atmosphere, thereby generating an oxide. Here, in first layer 12 having a relatively high cobalt content ratio, an oxide having a spinel structure tends to be likely to be formed. Therefore, in a porous current collector 20 produced by operating a solid oxide fuel cell 150 including porous body 10, framework main body 25 contains 90 mass% or more of nickel, cobalt, and oxygen in total, and a first region R1 has 80 volume% or more of the spinel structure. That is, first region R1 is rich in the oxide having the spinel structure.

The oxide having the spinel structure has excellent conductivity. Therefore, since first region R1 is rich in the oxide having the spinel structure in porous current collector 20, porous current collector 20 has excellent conductivity.

(b1) However, since the thermal expansion coefficient of the oxide having the spinel structure is higher than the thermal expansion coefficient of the cell for fuel cell, cracking of the cell generally tends to be likely to occur due to a difference between the thermal expansion coefficient of the porous current collector and the thermal expansion coefficient of the cell in the porous current collector rich in the oxide having the spinel structure.

On the other hand, in porous body 10 of the present disclosure, the cobalt content ratio in second layer 16 is less than 50 mass%. Here, in second layer 16 having a relatively low cobalt content ratio, an oxide having a lamellar rock salt type structure tends to be likely to be formed as an oxide. Therefore, in porous current collector 20 produced by operating solid oxide fuel cell 150 including porous body 10, framework main body 25 can contain 90 mass% or more of nickel, cobalt, and oxygen in total, and a second region R2 can have 80 volume% or more of the lamellar rock salt type structure.

The thermal expansion coefficient of the oxide having the lamellar rock salt type structure is lower than the thermal expansion coefficient of the oxide having the spinel structure, and is close to the thermal expansion coefficient of cell 100 for fuel cell. Therefore, since the thermal expansion coefficient of porous current collector 20 can be suppressed to be low as a whole, the difference in the thermal expansion coefficient from cell 100 for fuel cell can be suppressed. Hence, in the solid oxide fuel cell, the occurrence of cracking of cell 100 for fuel cell can be suppressed.

(c1) Further, in porous body 10, framework main body 15 consists of first layer 12 and second layer 16, and the ratio of the thickness of first layer 12 to the thickness of framework main body 15 is 10% or more and 90% or less. Thus, porous current collector 20 produced by operating solid oxide fuel cell 150 including porous body 10 can have both first region R1 having a thickness sufficient to improve conductivity and second region R2 having a thickness sufficient to suppress the occurrence of cracking of cell 100 for fuel cell.

In this way, porous body 10 according to the present embodiment can achieve both suppression of cracking of cell 100 for fuel cell and excellent conductivity of porous current collector 20 in the solid oxide fuel cell.

<<First Framework>>

Porous body 10 of the present disclosure includes first framework 11 having a three-dimensional mesh structure. The "three-dimensional mesh structure" means a structure in the form of a three-dimensional mesh. As shown in Fig. 1, first framework 11 has a three-dimensional mesh structure having pore portions 14. First framework 11 consists of framework main body 15 and inner portion 13 that is hollow and that is surrounded by framework main body 15. Further, as shown in Fig. 2, first framework 11 preferably has a triangular cross sectional shape orthogonal to the long-side direction thereof. However, the cross sectional shape of first framework 11 should not be limited thereto. The cross sectional shape of first framework 11 may be a polygonal shape other than the triangular shape, such as a quadrangular shape or a hexagonal shape. Further, the cross sectional shape of first framework 11 may be a circular shape. Moreover, framework main body 15 consists of first layer 12 and second layer 16, first layer 12 is located on the outer surface side of framework main body 15, and second layer 16 is located on the inner portion 13 side of framework main body 15. Here, the "outer surface" of framework main body 15 means a surface of framework main body 15 of Fig. 2 opposite to a surface thereof on the inner portion 13 side.

In first framework 11, inner portion 13 surrounded by framework main body 15 has a hollow tubular shape, and preferably has a cross section that is orthogonal to the long-side direction thereof and that has a triangular shape, another polygonal shape, or a circular shape. Since first framework 11 has a tubular shape, framework main body 15 has an inner wall that forms an inner side surface of the tube and an outer wall that forms an outer side surface of the tube. Since inner portion 13 surrounded by framework main body 15 is hollow in first framework 11, porous body 10 can be very light in weight.

<Composition of Framework Main Body>

Framework main body 15 contains 70 mass% or more of nickel and cobalt in total. Framework main body 15 preferably contains 70 mass% or more, 75 mass% or more, or 80 mass% or more of nickel and cobalt in total. Framework main body 15 preferably contains 100 mass% or less, 90 mass% or less, or 85 mass% or less of nickel and cobalt in total. Framework main body 15 preferably contains 70 mass% or more and 100 mass% or less, 75 mass% or more and 90 mass% or less, or 80 mass% or more and 85 mass% or less of nickel and cobalt in total. It should be noted that a total of the nickel content ratio and the cobalt content ratio in framework main body 15 is found by adding the nickel content ratio and the cobalt content ratio obtained by a below-described method.

Framework main body 15 preferably contains 10 mass% or more, 20 mass% or more, or 30 mass% or more of nickel. Framework main body 15 preferably contains 80 mass% or less, 70 mass% or less, or 60 mass% or less of nickel. Framework main body 15 preferably contains 10 mass% or more and 80 mass% or less, 20 mass% or more and 70 mass% or less, or 30 mass% or more and 60 mass% or less of nickel.

Framework main body 15 preferably contains 10 mass% or more, 20 mass% or more, or 30 mass% or more of cobalt. Framework main body 15 preferably contains 90 mass% or less, 80 mass% or less, or 70 mass% or less of cobalt. Framework main body 15 preferably contains 10 mass% or more and 90 mass% or less, 20 mass% or more and 80 mass% or less, or 30 mass% or more and 70 mass% or less of cobalt.

Each of the content ratios of nickel and cobalt in framework main body 15 can be found by performing an analysis in an observation image (electron microscope image) of a cross section perpendicular to the long-side direction of framework main body 15 by using an EDX (Energy Dispersive X-ray spectrometry) apparatus accompanied with a scanning electron microscope (SEM) (for example, SEM part: trade name "SUPRA35VP" provided by Carl Zeiss Microscopy; EDX part: trade name "octane super" provided by AMETEK).

It has been confirmed that there is no variation in measurement result even when a measurement region is freely changed as long as the measurement is performed for the same framework main body 15 by the above-described method.

Framework main body 15 may contain other element(s) as constituent element(s) as long as the functions and effects of porous body 10 of the present disclosure are not affected. Examples of the other element(s) that may be contained in framework main body 15 include manganese, iron, copper, chromium, sodium, potassium, silicon, carbon, phosphorus, sulfur, boron, chlorine, fluorine, magnesium, aluminum, calcium, zinc, gold and silver, nitrogen, molybdenum, tungsten, titanium, and the like. Each of these components may be contained as an inevitable impurity that is inevitably introduced in a below-described production method, for example. The content ratio of each of the other element(s) in framework main body 15 is preferably 5 mass% or less, and the content ratio of the total of the other element(s) is preferably 10 mass% or less. The content ratio of each of the other element(s) in framework main body 15 can be measured by the same method as the method of measuring each of the content ratios of nickel and cobalt in framework main body 15.

It has been confirmed that there is no variation in measurement result even when a measurement region is freely changed as long as the measurement is performed for the same framework main body 15 by the above-described method.

<Quantity per Unit Area in First Framework>

In the present embodiment, the total quantity of nickel and cobalt per unit area in first framework 11 is preferably 200 g/m$^2$ or more and 1000 g/m$^2$ or less. The total quantity of nickel and cobalt per unit area is more preferably 250 g/m$^2$ or more and 900 g/m$^2$ or less. The total quantity of nickel and cobalt per unit area can be appropriately adjusted when first nickel-cobalt alloy plating is performed onto a conductive resin-molded body in a second step of a method of producing porous body 10.

The total quantity of nickel and cobalt per unit area is converted into mass per unit volume of the framework (apparent density of the framework) as follows. That is, the apparent density of the framework is preferably 0.14 g/cm$^3$ or more and 0.75 g/cm$^3$ or less, and more preferably 0.18 g/cm$^3$ or more and 0.65 g/cm$^3$ or less. Here, the "apparent density of the framework" is defined by the following formula.

$$\text{The apparent density [g/cm}^3\text{] of the framework} = M\,[g] / V\,[cm^3]$$

M: mass [g] of the framework
V: volume [cm$^3$] of the shape of the appearance of the framework.

<Porosity of Porous Body>

The porosity of porous body 10 is preferably 40% or more and 98% or less, more preferably 45% or more and 98% or less, and most preferably 50% or more and 98% or less. When the porosity of porous body 10 is 40% or more, porous body 10 can be very light in weight, and the surface area of porous body 10 can be large. When the porosity of porous body 10 is 98% or less, porous body 10 can have sufficient strength.

The porosity of first framework 11 is defined by the following formula.

$$\text{Porosity [\%]} = [1-\{M/(V \times d)\}] \times 100$$

M: mass [g] of the framework
V: volume [cm$^3$] of the shape of the appearance of the framework
d: density [g/cm$^3$] of the metal of the framework

<Pore Diameter of Porous Body>

The average pore diameter of porous body 10 is preferably 60 $\mu$m or more and 3500 $\mu$m or less. When the average pore diameter of porous body 10 is 60 $\mu$m or more, the strength of porous body 10 can be increased. When the average pore diameter of porous body 10 is 3500 $\mu$m or less, bendability (bending workability) of porous body 10 can be increased. From these viewpoints, the average pore diameter of porous body 10 is more preferably 80 $\mu$m or more and 1000 $\mu$m or less, and most preferably 100 $\mu$m or more and 850 $\mu$m or less.

The average pore diameter of porous body 10 can be found by the following method. First, porous body 10 is cut perpendicularly to the long-side direction of first framework 11 so as to expose cross sections of the framework. One of the cut cross sections is selected, and this cross section is observed in an enlarged manner with an electron microscope at a magnification of 3000 times, thereby obtaining an observation image. Such observation images are prepared for at least 10 visual fields, and the number of pores per inch (25.4 mm = 25400 $\mu$m) in each of the 10 visual fields is found. Further, a numerical value calculated by substituting the average value (nc) of the numbers of pores in the ten visual fields into the following formula is defined as the average pore diameter of porous body 10.

$$\text{Average pore diameter [μm]} = 25400\ \text{μm/nc}$$

<Thickness of Framework Main Body>

In the present embodiment, the thickness of framework main body 15 is preferably 10 μm or more and 50 μm or less. Here, the "thickness of framework main body 15" means the average value of the shortest distances from the inner wall, which is an interface with the hollow space of inner portion 13 of first framework 11, to the outer wall that is the outer side of first framework 11. The thickness of framework main body 15 can be found by observing the cross section of the framework with an electron microscope.

Specifically, the thickness of framework main body 15 can be found by the following method. First, porous body 10 is cut along a plane normal to the long-side direction of first framework 11 so as to expose cross sections of framework main body 15. One of the cut cross sections is selected, and this cross section is observed in an enlarged manner with an electron microscope at a magnification of 3000 times, thereby obtaining an observation image. Next, in the observation image, the thickness of framework main body 15 is measured at ten locations. Next, the average of the measurement values at the ten locations is calculated. The average of the measurement values at the ten locations corresponds to the thickness of framework main body 15 of the present disclosure.

<<First Layer>>

<Composition of First Layer>

The cobalt content ratio in first layer 12 is 50 mass% or more. Since first region R1 of porous current collector 20 can accordingly have 80 volume% or more of the spinel structure, first region R1 can have excellent conductivity. The lower limit of the cobalt content ratio in first layer 12 is preferably 52 mass% or more, 55 mass% or more, or 60 mass% or more. The upper limit of the cobalt content ratio in first layer 12 is preferably 90 mass% or less, 80 mass% or less, or 75 mass% or less. The cobalt content ratio in first layer 12 is preferably 50 mass% or more and 90 mass% or less, 55 mass% or more and 80 mass% or less, or 60 mass% or more and 75 mass% or less.

The lower limit of the nickel content ratio in first layer 12 is preferably 0 mass% or more, 2 mass% or more, or 5 mass% or more. The upper limit of the nickel content ratio in first layer 12 is preferably 10 mass% or less, 8 mass% or less, or 7 mass% or less. The nickel content ratio in first layer 12 is preferably 0 mass% or more and 10 mass% or less, 2 mass% or more and 8 mass% or less, or 5 mass% or more and 7 mass% or less.

Each of the content ratios of cobalt and nickel in first layer 12 is found by the following method. That is, each of the content ratios of cobalt and nickel in first layer 12 can be found by analyzing the composition of the outer layer (first layer 12) in framework main body 15 in an observation image (electron microscope image) of a cross section perpendicular to the long-side direction of framework main body 15 by using an EDX apparatus accompanied with a scanning electron microscope (SEM) (for example, SEM part: trade name "SUPRA35VP" provided by Carl Zeiss Microscopy; EDX part: trade name "octane super" provided by AMETEK).

It has been confirmed that there is no variation in measurement result even when a measurement region is freely changed as long as the measurement is performed for the same first layer 12 by the above-described method.

First layer 12 preferably contains 70 mass% or more of nickel and cobalt in total. First layer 12 preferably contains 70 mass% or more, 75 mass% or more, or 80 mass% or more of nickel and cobalt in total. First layer 12 preferably contains 100 mass% or less, 90 mass% or less, or 85 mass% or less of nickel and cobalt in total. First layer 12 preferably contains 70 mass% or more and 100 mass% or less, 75 mass% or more and 90 mass% or less, or 80 mass% or more and 85 mass% or less of nickel and cobalt in total. It should be noted that the total of the nickel content ratio and the cobalt content ratio in first layer 12 is found by adding the nickel content ratio and the cobalt content ratio obtained by the above-described method.

First layer 12 may contain other element(s) as long as the functions and effects of porous body 10 of the present disclosure are not affected. Examples of the other element(s) include manganese, iron, copper, chromium, sodium, potassium, silicon, carbon, phosphorus, sulfur, boron, chlorine, fluorine, magnesium, aluminum, calcium, zinc, gold and silver, nitrogen, molybdenum, tungsten, titanium, and the like. The content ratio of each of the other element(s) in first layer 12 is preferably 5 mass% or less, and the content ratio of the total of the other element(s) in first layer 12 is preferably 10 mass% or less. The content ratio of each of the other element(s) in first layer 12 can be measured by the same method as the method of measuring each of the content ratios of cobalt and nickel in first layer 12.

It has been confirmed that there is no variation in measurement result even when a measurement region is freely changed as long as the measurement is performed for the same first layer 12 by the above-described method.

<Thickness of First Layer>

The ratio of the thickness of first layer 12 to the thickness of framework main body 15 is 10% or more and 90% or less. Thus, porous current collector 20 produced by operating solid oxide fuel cell 150 including porous body 10 can have first region R1 having a thickness sufficient to improve the conductivity. The lower limit of the ratio of the thickness of first layer 12 to the thickness of framework main body 15 is preferably 10% or more, 20% or more, or 30% or more. The upper limit of the ratio of the thickness of first layer 12 to the thickness of framework main body 15 is preferably 90% or less, 85% or less, or 80% or less. The ratio of the thickness of first layer 12 to the thickness of framework main body 15 is preferably 20% or more and 90% or less, 20% or more and 85% or less, or 30% or more and 80% or less.

The thickness of first layer 12 is preferably 1 $\mu$m or more and 45 $\mu$m or less, 5 $\mu$m or more and 40 $\mu$m or less, and 10 $\mu$m or more and 35 $\mu$m or less. Thus, the conductivity of framework main body 25 of porous current collector 20 produced by operating solid oxide fuel cell 150 including porous body 10 can be further increased, thereby further increasing the conductivity of porous current collector 20. It should be noted that the thickness of first layer 12 can be adjusted by appropriately changing current density and time as electrolysis conditions in a third step of the method of producing porous body 10.

In porous body 10, the thickness of first layer 12 is found by the following method. That is, the thickness of first layer 12 can be found by observing a cross section of first framework 11 in the thickness direction with an electron microscope and measuring the thickness of the outer layer (first layer 12) of framework main body 15.

It has been confirmed that there is no variation in measurement result even when a measurement region is freely changed as long as the measurement is performed for the same first layer 12 by the above-described method.

<<Second Layer>>

<Composition of Second Layer>

The cobalt content ratio in second layer 16 is less than 50 mass%. Since the thermal expansion coefficient of porous current collector 20 produced by operating solid oxide fuel cell 150 including porous body 10 can be accordingly suppressed to be low as a whole, it is possible to suppress the difference between the thermal expansion coefficient of porous current collector 20 and the thermal expansion coefficient of cell 100 for fuel cell, thereby suppressing occurrence of cracking of cell 100 for fuel cell in the solid oxide fuel cell. The lower limit of the cobalt content ratio in second layer 16 is preferably 10 mass% or more, 20 mass% or more, or 30 mass% or more. The upper limit of the cobalt content ratio in second layer 16 is preferably less than 48 mass%, 45 mass% or less, or 40 mass% or less. The cobalt content ratio in second layer 16 is preferably 10 mass% or more and less than 50 mass%, 20 mass% or more and 45 mass% or less, or 30 mass% or more and 40 mass% or less.

The lower limit of the nickel content ratio in second layer 16 is preferably 30 mass% or more, 35 mass% or more, or 40 mass% or more. The upper limit of the nickel content ratio in second layer 16 is preferably 90 mass% or less, 80 mass% or less, or 70 mass% or less. The nickel content ratio in second layer 16 is preferably 30 mass% or more and 90 mass% or less, 35 mass% or more and 80 mass% or less, or 40 mass% or more and 70 mass% or less.

Each of the content ratios of cobalt and nickel in second layer 16 is found by the following method. That is, each of the content ratios of cobalt and nickel in second layer 16 can be found by analyzing the inner layer (second layer 16) of framework main body 15 in an observation image (electron microscope image) of a cross section perpendicular to the long-side direction of framework main body 15 by using an EDX apparatus accompanied with a scanning electron microscope (SEM) (for example, SEM part: trade name "SUPRA35VP" provided by Carl Zeiss Microscopy; EDX part: trade name "octane super" provided by AMETEK).

It has been confirmed that there is no variation in measurement result even when a measurement region is freely changed as long as the measurement is performed for the same second layer 16 by the above-described method.

Second layer 16 preferably contains 70 mass% or more of nickel and cobalt in total. Second layer 16 preferably contains 70 mass% or more, 75 mass% or more, or 80 mass% or more of nickel and cobalt in total. Second layer 16 preferably contains 100 mass% or less, 90 mass% or less, or 85 mass% or less of nickel and cobalt in total. Second layer 16 preferably contains 70 mass% or more and 100 mass% or less, 75 mass% or more and 90 mass% or less, or 80 mass% or more and 85 mass% or less of nickel and cobalt in total. It should be noted that the total of the nickel content ratio and the cobalt content ratio in second layer 16 is found by adding the nickel content ratio and the cobalt content ratio found by the above-described method.

Second layer 16 may contain other element(s) as long as the functions and effects of porous body 10 of the present disclosure are not affected. Examples of the other element(s) include manganese, iron, copper, chromium, sodium, potassium, silicon, carbon, phosphorus, sulfur, boron, chlorine, fluorine, magnesium, aluminum, calcium, zinc, gold and silver, nitrogen, molybdenum, tungsten, titanium, and the like. The content ratio of each of the other element(s) in second layer 16 is preferably 5 mass% or less, and the content ratio of the total of the other element(s) in second layer 16 is preferably 10 mass% or less. The content ratio of each of the other element(s) in second layer 16 can be measured by the same method as the method of measuring each of the content ratios of cobalt and nickel in second layer 16.

It has been confirmed that there is no variation in measurement result even when a measurement region is freely changed as long as the measurement is performed for the same second layer 16 by the above-described method.

<Thickness of Second Layer>

The ratio of the thickness of second layer 16 to the thickness of framework main body 15 is 10% or more and 90% or less. Thus, porous current collector 20 produced by operating solid oxide fuel cell 150 including porous body 10 can have second region R2 having a thickness sufficient to suppress the occurrence of cracking of cell 100 for fuel cell. The lower limit of the ratio of the thickness of second layer 16 to the thickness of framework main body 15 is preferably 10% or more, 15% or more, or 25% or more. The upper limit of the ratio of the thickness of second layer 16 to the thickness of framework main body 15 is preferably 90% or less, 80% or less, or 70% or less. The ratio of the thickness of second layer 16 to the thickness of framework main body 15 is preferably 10% or more and 90% or less, 15% or more and 80% or less, or 25% or more and 70% or less.

The thickness of second layer 16 is preferably 1 $\mu$m or more and 45 $\mu$m or less, 3 $\mu$m or more and 35 $\mu$m or less, and 5 $\mu$m or more and 25 $\mu$m or less. Thus, porous current collector 20 produced by operating solid oxide fuel cell 150 including porous body 10 allows for further suppression of occurrence of cracking of cell 100 for fuel cell. It should be noted that the thickness of second layer 16 can be adjusted by appropriately changing current density and time as electrolysis conditions in the second step of the method of producing porous body 10.

In porous body 10, the thickness of second layer 16 is found by the following method. That is, the thickness of first layer 12 can be found by observing a cross section of first framework 11 in the thickness direction with an electron microscope and measuring the thickness of the inner layer (second layer 16) of framework main body 15.

It has been confirmed that there is no variation in measurement result even when a measurement region is freely changed as long as the measurement is performed for the same second layer 16 by the above-described method.

<<Shape of Porous Body>>

The appearance of porous body 10 according to the present embodiment can have various shapes such as a sheet shape, a rectangular parallelepiped shape, a spherical shape, and a cylindrical column shape. In particular, porous body 10 preferably has an appearance having a sheet shape and a thickness of 0.2 mm or more and 2 mm or less. The thickness of porous body 10 is more preferably 0.5 mm or more and 1 mm or less. When the thickness of porous body 10 is 2 mm or less, porous body 10 having a thickness smaller than that of a conventional one can be formed, thereby reducing a necessary amount of metal. Since the thickness of porous body 10 is 0.2 mm or more, necessary strength can be provided. The thickness of porous body 10 can be measured by, for example, a commercially available digital thickness gauge (Teclock).

<<Method of Producing Porous Body>>

Porous body 10 according to the present embodiment can be produced, for example, by the following method. That is, porous body 10 can be produced by the method of producing porous body 10, the method including the following first to fourth steps in this order:

the first step of obtaining a conductive resin-molded body by forming a conductive coating layer containing conductive carbon on a surface of a resin-molded body composed of a foamed resin;
the second step of obtaining a first porous body precursor by performing first nickel-cobalt alloy plating onto the conductive resin-molded body using a plating bath having less than 20 g/L of cobalt;
the third step of obtaining a second porous body precursor by performing second nickel-cobalt alloy plating onto the first porous body precursor using a plating bath having 90 g/L or more of cobalt; and
the fourth step of obtaining porous body 10 by performing heat treatment onto the second porous body precursor in atmosphere.

<First Step>

First, the resin-molded body composed of a foamed resin is prepared. Examples of the foamed resin include a polyurethane resin, a melamine resin, and the like. As the resin-molded body composed of a foamed resin, a commercially available resin-molded body can be used. Next, in order to impart conductivity to the resin-molded body, a conductive coating layer is formed on a surface of the resin-molded body. A method of forming the conductive coating layer is not

**EP 4 597 648 A1**

particularly limited. Examples of the method include: a method of applying a conductive coating material to a surface of the resin-molded body and/or impregnating the surface of the resin-molded body with the conductive coating material, the conductive coating material containing conductive particles, such as carbon or conductive ceramic, and a binder; a method of forming a layer composed of conductive metal such as nickel and copper on the surface of the resin-molded body by an electroless plating method; and a method of forming a layer composed of conductive metal on the surface of the resin-molded body by a vapor deposition method or a sputtering method. Thus, the conductive resin-molded body can be obtained.

<Second Step>

Next, the first nickel-cobalt alloy plating is performed onto the conductive resin-molded body using the plating bath having less than 20 g/L of cobalt, thereby obtaining the first porous body precursor. Thus, in porous body 10, the cobalt content ratio in second layer 16 can be less than 50 mass%. It should be noted that the plating method is not particularly limited, and electroless plating can be applied. From the viewpoint of efficiency, electrolytic plating (so-called electroplating) is preferably used as the plating method. In the electrolytic plating, the conductive resin-molded body is used as a cathode.

As the plating bath used for the first nickel-cobalt alloy plating, a known plating bath can be used as long as less than 20 g/L of cobalt is contained. For example, a Watts bath, a chloride bath, a sulfamate bath, or the like can be used. Examples of bath composition and electrolysis conditions in the first nickel-cobalt alloy plating are as follows.

(Bath Composition)
Salt (aqueous solution): nickel sulfamate (containing 80 to 150 g/L of nickel in the plating bath)
Cobalt sulfamate (containing less than 20 g/L of cobalt in the plating bath)
Borate: 30 to 40 g/L
pH: 4.0 to 4.5
(Electrolysis Conditions)
Temperature: 50 to 60°C
Current density: 5 to 10 A/dm$^2$
Anode: insoluble positive electrode
Time: 3 to 30 minutes

In this way, the first porous body precursor in which the nickel-cobalt alloy is plated on the conductive resin-molded body can be obtained.

<Third Step>

Next, the second nickel-cobalt alloy plating is performed onto the first porous body precursor using the plating bath having 90 g/L or more of cobalt, thereby obtaining the second porous current collector precursor. Thus, in porous body 10, the cobalt content ratio in first layer 12 can be 50 mass% or more. It should be noted that the plating method is not particularly limited, and electroless plating may be applied. From the viewpoint of efficiency, electrolytic plating (so-called electroplating) is preferably used as the plating method. In the electrolytic plating, the conductive resin-molded body is used as a cathode.

As the plating bath used for the second nickel-cobalt alloy plating, a known plating bath can be used as long as 90 g/L or more of cobalt is contained. For example, a Watts bath, a chloride bath, a sulfamate bath, or the like can be used. Examples of bath composition and electrolysis conditions of the second nickel-cobalt alloy plating are as follows.

(Bath Composition)
Salt (aqueous solution): nickel sulfamate (containing 80 to 150 g/L of nickel in the plating bath)
Cobalt sulfamate (containing 90 g/L or more of cobalt in the plating bath)
Borate: 30 to 40 g/L
pH: 4.0 to 4.5
(Electrolysis Conditions)
Temperature: 50 to 60°C
Current density: 5 to 10 A/dm$^2$
Anode: insoluble positive electrode
Time: 3 to 30 minutes

In this way, the second porous body precursor in which the nickel-cobalt alloy is plated on the first porous body precursor can be obtained.

<Fourth Step>

Next, the heat treatment is performed onto the second porous body precursor in the atmosphere, thereby obtaining porous body 10. Conditions of the heat treatment can be, for example, as follows.

(Heat Treatment Conditions)
Temperature: 600 to 1000°C
Time: 5 to 15 minutes

When the heat treatment is performed onto the second porous precursor in the atmosphere, the resin component in the conductive resin-molded body is burned and removed. Therefore, a portion corresponding to the resin-molded body in the second porous body precursor ceases to exist, with the result that inner portion 13 of porous body 10 becomes a hollow region.

Porous body 10 according to the first embodiment can be produced through the above-described steps. That is, porous body 10 includes first framework 11 having a three-dimensional mesh structure, first framework 11 consists of framework main body 15 and inner portion 13 that is hollow and that is surrounded by framework main body 15, framework main body 15 consists of first layer 12 and second layer 16, first layer 12 is located on the outer surface side of framework main body 15, second layer 16 is located on the inner portion 13 side of framework main body 15, framework main body 15 contains 70 mass% or more of nickel and cobalt in total, and the cobalt content ratio in first layer 12 is 50 mass% or more, the cobalt content ratio in second layer 16 is less than 50 mass%, and the ratio of the thickness of first layer 12 to the thickness of framework main body 15 is 10% or more and 90% or less.

[Second Embodiment: Solid Oxide Fuel Cell Including Porous Body]

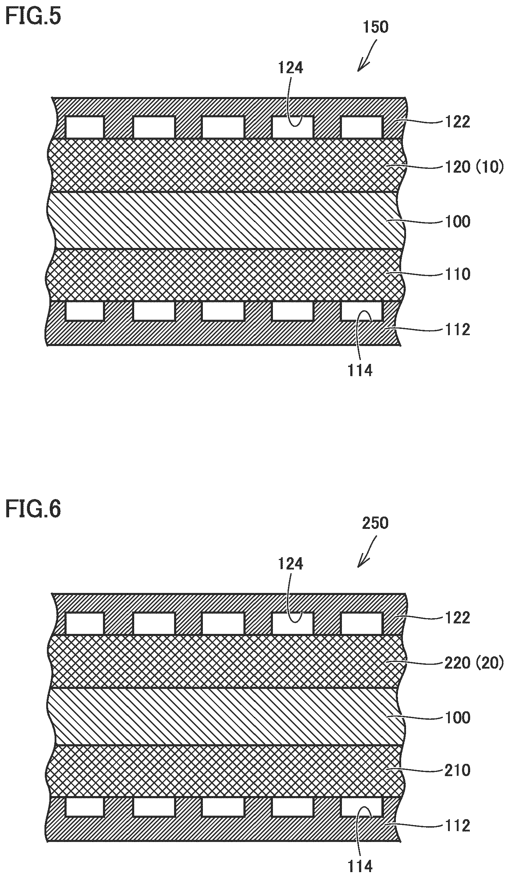

A solid oxide fuel cell according to one embodiment of the present disclosure will be described with reference to Fig. 5. Fig. 5 is a schematic cross sectional view showing the solid oxide fuel cell according to one embodiment of the present disclosure. In Fig. 5, the solid oxide fuel cell includes a porous body 110 for hydrogen electrode, a porous body 120 for air electrode, and a cell 100 for fuel cell. Cell 100 for fuel cell is provided between porous body 110 for hydrogen electrode and porous body 120 for air electrode. Here, "porous body 110 for hydrogen electrode" means a porous body on a side of supplying hydrogen in the fuel cell. "Porous body 120 for air electrode" means a porous body on a side of supplying a gas containing oxygen (for example, air) in the fuel cell. In the solid oxide fuel cell of the present embodiment, porous body 120 for air electrode includes porous body 10 of the first embodiment. That is, the solid oxide fuel cell of the present embodiment includes porous body 10 according to the first embodiment. Thus, it is possible to provide a solid oxide fuel cell in which cell 100 for fuel cell is less likely to be cracked and which has excellent output performance.

Cell 100 for fuel cell can include: an air electrode; a hydrogen electrode; an electrolyte layer provided between the air electrode and the hydrogen electrode; and an intermediate layer provided between the electrolyte layer and the air electrode to prevent reaction therebetween (all not shown). As the air electrode, for example, an oxide of LaSrCo (LSC) is used. As the electrolyte layer, for example, an oxide of Zr doped with Y (YSZ) is used. As the intermediate layer, for example, an oxide of Ce doped with Gd (GDC) is used. As the hydrogen electrode, for example, a mixture of YSZ and $NiO_2$ is used.

In Fig. 5, the solid oxide fuel cell further includes a first interconnector 112 having a fuel flow channel 114 and a second interconnector 122 having an oxidant flow channel 124. Fuel flow channel 114 is a flow channel for supplying fuel (for example, hydrogen) to the hydrogen electrode. Fuel flow channel 114 is provided in a main surface of first interconnector 112 facing porous body 110 for hydrogen electrode. Oxidant flow channel 124 is a flow channel for supplying an oxidant (for example, oxygen) to the air electrode. Oxidant flow channel 124 is provided in a main surface of second interconnector 122 facing porous body 120 for air electrode.

<<Method of Producing Solid Oxide Fuel Cell Having Porous Body>>

Solid oxide fuel cell 150 including porous body 10 according to the present embodiment can be produced by appropriately using a known method, except that porous body 10 according to the first embodiment is used as porous body 120 for air electrode. Therefore, a method of producing solid oxide fuel cell 150 including porous body 10 should not be particularly limited except that porous body 10 according to the first embodiment is used.

[Third Embodiment: Porous Current Collector]

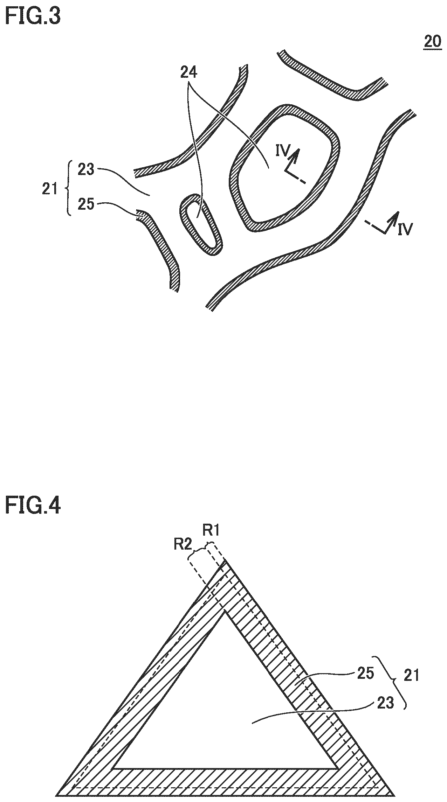

A porous current collector 20 according to one embodiment of the present disclosure will be described with reference to Figs. 3 and 4.

Porous current collector 20 of one embodiment of the present disclosure (hereinafter, also referred to as the "present embodiment") including a second framework 21 having a three-dimensional mesh structure, wherein

second framework 21 consists of a framework main body 25 and an inner portion 23 that is hollow and that is surrounded by framework main body 25,
framework main body 25 consists of a first region R1 and a second region R2,
first region R1 is located on an outer surface side of framework main body 25,
second region R2 is located on the inner portion 23 side of framework main body 25,
framework main body 25 contains 90 mass% or more of nickel, cobalt, and oxygen in total,
first region R1 has 80 volume% or more of a spinel structure,
second region R2 has 80 volume% or more of a lamellar rock salt type structure, and
a ratio of a thickness of first region R1 to a thickness of framework main body 25 is 10% or more and 90% or less.

Porous current collector 20 of the present disclosure can achieve both suppression of cracking of cell 100 for fuel cell and excellent conductivity of porous current collector 20 in the solid oxide fuel cell. This is presumably due to the following reasons.

(a2) Porous current collector 20 of the present disclosure includes second framework 21 having a three-dimensional mesh structure, second framework 21 consists of framework main body 25 and inner portion 23 that is hollow and that is surrounded by framework main body 25, framework main body 25 consists of first region R1 and second region R2, first region R1 is located on the outer surface side of framework main body 25, second region R2 is located on the inner portion 23 side of framework main body 25, framework main body 25 contains 90 mass% or more of nickel, cobalt, and oxygen in total, and first region R1 has 80 volume% or more of the spinel structure. Since first region R1 is thus rich in oxide having the spinel structure, porous current collector 20 can have excellent conductivity.

(b2) However, since the thermal expansion coefficient of the oxide having the spinel structure is higher than the thermal expansion coefficient of the cell for fuel cell, cracking of the cell generally tends to be likely to occur due to a difference between the thermal expansion coefficient of the porous current collector and the thermal expansion coefficient of the cell in the porous current collector rich in the oxide having the spinel structure.

On the other hand, in porous current collector 20 of the present disclosure, since second region R2 has 80 volume% or more of the lamellar rock salt type structure, second region R2 can be rich in an oxide having the lamellar rock salt type structure. Here, the thermal expansion coefficient of the oxide having the lamellar rock salt type structure is lower than the thermal expansion coefficient of the oxide having the spinel structure. Therefore, since the thermal expansion coefficient of porous current collector 20 can be suppressed to be low as a whole, the difference in the thermal expansion coefficient from cell 100 for fuel cell can be suppressed. Hence, in the solid oxide fuel cell, the occurrence of cracking of cell 100 for fuel cell can be suppressed.

(c2) Further, framework main body 25 consists of first region R1 and second region R2, and the ratio of the thickness of first region R1 to the thickness of framework main body 25 is 10% or more and 90% or less. Thus, porous current collector 20 can have both first region R1 having a thickness sufficient to improve conductivity and second region R2 having a thickness sufficient to suppress the occurrence of cracking of cell 100 for fuel cell.

That is, porous current collector 20 according to the present embodiment can achieve both suppression of cracking of cell 100 for fuel cell and excellent conductivity of porous current collector 20 in the solid oxide fuel cell.

<<Second Framework>>

Porous current collector 20 of the present disclosure includes second framework 21 having a three-dimensional mesh structure. The "three-dimensional mesh structure" means a structure in the form of a three-dimensional mesh. As shown in Fig. 3, second framework 21 has a three-dimensional mesh structure having pore portions 24. Second framework 21 consists of framework main body 25 and inner portion 23 that is hollow and that is surrounded by framework main body 25. Further, as shown in Fig. 4, second framework 21 preferably has a triangular cross sectional shape orthogonal to the long-side direction thereof. However, the cross sectional shape of second framework 21 should not be limited thereto. The cross sectional shape of framework 21 may be a polygonal shape other than the triangular shape, such as a quadrangular shape or a hexagonal shape. Further, the cross sectional shape of second framework 21 may be a circular shape. Moreover, framework main body 25 consists of first region R1 and second region R2, first region R1 is located on the outer surface side of framework main body 25, and second region R2 is located on the inner portion 23 side of framework main body 25. Here, the "outer surface" of framework main body 25 means a surface of framework main body 25 of Fig. 4 opposite to a surface thereof on the inner portion 23 side.

That is, in second framework 21, inner portion 23 surrounded by framework main body 25 has a hollow tubular shape, and preferably has a cross section that is orthogonal to the long-side direction thereof and that has a triangular shape, another polygonal shape, or a circular shape. Since second framework 21 has a tubular shape, framework main body 25 has an inner wall that forms an inner side surface of the tube and an outer wall that forms an outer side surface of the tube. Since inner portion 23 surrounded by framework main body 25 is hollow in second framework 21, porous current collector 20 can be very light in weight.

<Composition of Framework Main Body>

Framework main body 25 contains 90 mass% or more of nickel, cobalt, and oxygen in total. Framework main body 25 preferably contains 90 mass% or more, 92 mass% or more, or 95 mass% or more of nickel, cobalt, and oxygen in total. Framework main body 25 preferably contains 100 mass% or less, 99 mass% or less, or 98 mass% or less of nickel, cobalt, and oxygen in total. Framework main body 25 preferably contains 90 mass% or more and 100 mass% or less, 92 mass% or more and 99 mass% or less, or 95 mass% or more and 98 mass% or less of nickel, cobalt, and oxygen in total. It should be noted that the total of the nickel content ratio, the cobalt content ratio, and the oxygen content ratio in framework main body 25 is found by adding the nickel content ratio, the cobalt content ratio, and the oxygen content ratio in framework main body 25 obtained by a below-described method.

Framework main body 25 preferably contains 10 mass% or more, 20 mass% or more, or 30 mass% or more of nickel. Framework main body 25 preferably contains 80 mass% or less, 70 mass% or less, or 60 mass% or less of nickel. Framework main body 25 preferably contains 10 mass% or more and 80 mass% or less, 20 mass% or more and 70 mass% or less, or 30 mass% or more and 60 mass% or less of nickel.

Framework main body 25 preferably contains 10 mass% or more, 20 mass% or more, or 30 mass% or more of cobalt. Framework main body 25 preferably contains 90 mass% or less, 80 mass% or less, or 70 mass% or less of cobalt. Framework main body 25 preferably contains 10 mass% or more and 90 mass% or less, 20 mass% or more and 80 mass% or less, or 30 mass% or more and 70 mass% or less of cobalt.

Framework main body 25 preferably contains 10 mass% or more, 20 mass% or more, or 30 mass% or more of oxygen. Framework main body 25 preferably contains 40 mass% or less, 38 mass% or less, or 36 mass% or less of oxygen. Framework main body 25 preferably contains 10 mass% or more and 40 mass% or less, 20 mass% or more and 38 mass% or less, or 30 mass% or more and 36 mass% or less of oxygen.

Each of the content ratios of nickel, cobalt and oxygen in framework main body 25 can be found by performing an analysis in an observation image (electron microscope image) of a cross section of the framework perpendicular to the long-side direction of framework main body 25 by using an EDX apparatus accompanied with a scanning electron microscope (SEM) (for example, SEM part: trade name "SUPRA35VP" provided by Carl Zeiss Microscopy; EDX part: trade name "octane super" provided by AMETEK).

It has been confirmed that there is no variation in measurement result even when a measurement region is freely changed as long as the measurement is performed for the same framework main body 25 by the above-described method.

Framework main body 25 may contain other element(s) as constituent element(s) as long as the functions and effects of porous current collector 20 of the present disclosure are not affected. Examples of the other element(s) that may be contained in framework main body 25 include manganese, iron, copper, chromium, sodium, potassium, silicon, carbon, phosphorus, sulfur, boron, chlorine, fluorine, magnesium, aluminum, calcium, zinc, gold and silver, nitrogen, molybdenum, tungsten, titanium, and the like. Each of these components may be contained as an inevitable impurity that is inevitably introduced in a below-described production method, for example. The content ratio of each of the other element(s) in framework main body 25 is preferably 5 mass% or less, and the content ratio of the total of the other element(s) in framework main body 25 is preferably 10 mass% or less. The content ratio of each of the other element(s) in framework main body 25 can be measured by the same method as the method of measuring each of the content ratios of nickel, cobalt, and oxygen in framework main body 25.

<Quantity per Unit Area in Second Framework>

In the present embodiment, the total quantity of nickel and cobalt per unit area in second framework 21 is preferably 200 g/m$^2$ or more and 1000 g/m$^2$ or less. The total quantity of nickel and cobalt per unit area is more preferably 250 g/m$^2$ or more and 900 g/m$^2$ or less. The total quantity of nickel and cobalt per unit area can be appropriately adjusted when the first nickel-cobalt alloy plating and the second nickel-cobalt alloy plating are performed in the second and third steps of the method of producing the porous body.

The total quantity of nickel and cobalt per unit area is converted into mass per unit volume of second framework 21 (apparent density of the framework) as follows. That is, the apparent density of second framework 21 is preferably 0.14 g/cm$^3$ or more and 0.75 g/cm$^3$ or less, and more preferably 0.18 g/cm$^3$ or more and 0.65 g/cm$^3$ or less. Here, the "apparent density of the framework" is defined by the following formula.

$$\text{The apparent density [g/cm}^3\text{] of the framework} = M \text{ [g] / } V \text{ [cm}^3\text{]}$$

M: mass [g] of the framework
V: volume [cm$^3$] of the shape of the appearance of the framework

<Porosity of Porous Current Collector 20>

The porosity of porous current collector 20 is preferably 40% or more and 98% or less, more preferably 45% or more and 98% or less, and most preferably 50% or more and 98% or less. When the porosity of porous current collector 20 is 40% or more, porous current collector 20 can be very light in weight, and the surface area of porous current collector 20 can be large. When the porosity of porous current collector 20 is 98% or less, porous current collector 20 can have sufficient strength.

The porosity of porous current collector 20 is defined by the following formula.

$$\text{Porosity [\%]} = [1 - \{M/(V \times d)\}] \times 100$$

M: mass [g] of the framework
V: volume [cm$^3$] of the shape of the appearance of the framework
d: density [g/cm$^3$] of the metal of the framework

<Pore Diameter of Porous Current Collector>

The average pore diameter of porous current collector 20 is preferably 60 $\mu$m or more and 3500 $\mu$m or less. When the average pore diameter of porous current collector 20 is 60 $\mu$m or more, the strength of porous current collector 20 can be increased. When the average pore diameter of porous current collector 20 is 3500 $\mu$m or less, bendability (bending workability) of porous current collector 20 can be increased. From these viewpoints, the average pore diameter of porous current collector 20 is more preferably 80 $\mu$m or more and 1000 $\mu$m or less, and most preferably 100 $\mu$m or more and 850 $\mu$m or less.

The average pore diameter of porous current collector 20 can be determined by the following method. First, porous current collector 20 is cut perpendicularly to the long-side direction of second framework 21 so as to expose cross sections of second framework 21. One of the cut cross sections is selected, and this cross section is observed in an enlarged manner with an electron microscope at a magnification of 3000 times, thereby obtaining an observation image. Such observation images are prepared for at least 10 visual fields, and the number of pores per inch (25.4 mm = 25400 $\mu$m) in each of the 10 visual fields is found. Further, a numerical value calculated by substituting the average value (nc) of the numbers of pores in the ten visual fields into the following formula is defined as the average pore diameter of porous current collector 20.

$$\text{Average pore diameter [}\mu\text{m]} = 25400 \ \mu\text{m/nc}$$

<Thickness of Framework Main Body>

In the present embodiment, the lower limit of the thickness of framework main body 25 is preferably 10 $\mu$m or more, 13 $\mu$m or more, or 15 $\mu$m or more. The upper limit of the thickness of framework main body 25 is preferably 50 $\mu$m or less, 40 $\mu$m or less, or 30 $\mu$m or less. The thickness of framework main body 25 is preferably 10 $\mu$m or more and 50 $\mu$m or less, 13 $\mu$m or more and 40 $\mu$m or less, or 15 $\mu$m or more and 30 $\mu$m or less. Here, the "thickness of framework main body 25" means the shortest distance from the inner wall facing hollow inner portion 23 of the framework to the outer wall located on the outer side of the framework, and the average value of the shortest distances is defined as the "thickness of framework main body 25". The thickness of framework main body 25 can be found by observing a cross section of second framework 21 with an electron microscope.

Specifically, the thickness of framework main body 25 can be found by the following method. First, porous current collector 20 is cut perpendicularly to the long-side direction of second framework 21 so as to expose cross sections of framework main body 25. One of the cut cross sections is selected, and this cross section is observed in an enlarged manner with an electron microscope at a magnification of 3000 times, thereby obtaining an observation image. Next, in the observation image, the shortest distance from the inner wall of second framework 21 facing hollow inner portion 23 to the outer wall located on the outer side of second framework 21 is measured at ten locations. The average of the measurement values at the ten locations is calculated. The average of the measurement values at the ten locations corresponds to the "thickness of framework main body 25" of the present disclosure.

<First Region>

(Crystal Structure)

First region R1 has 80 volume% or more of the spinel structure. Since a large amount of the oxide having the spinel structure can be accordingly contained in first region R1, porous current collector 20 can have excellent conductivity. First region R1 preferably has 80 volume% or more, 85 volume% or more, or 90 volume% or more of the spinel structure. First region R1 preferably has 100 volume% or less, 98 volume% or less, or 96 volume% or less of the spinel structure. First region R1 preferably has 80 volume% or more and 100 volume% or less, 85 volume% or more and 98 volume% or less, or 90 volume% or more and 96 volume% or less of the spinel structure.

(Thickness)

The ratio of the thickness of first region R1 to the thickness of framework main body 25 is 10% or more and 90% or less. Thus, the conductivity of framework main body 25 can be increased, thereby increasing the conductivity of porous current collector 20. The lower limit of the ratio of the thickness of first region R1 to the thickness of framework main body 25 is preferably 10% or more, 20% or more, or 30% or more. The upper limit of the ratio of the thickness of first region R1 to the thickness of framework main body 25 is preferably 90% or less, 85% or less, or 80% or less. The ratio of the thickness of first region R1 to the thickness of framework main body 25 is preferably 10% or more and 90% or less, 20% or more and 85% or less, and 30% or more and 80% or less. The ratio of the thickness of first region R1 to the thickness of framework main body 25 is found as a percentage of a value obtained by dividing the thickness of first region R1 by the thickness of framework main body 25.

The thickness of first region R1 is preferably 1 $\mu$m or more and 45 $\mu$m or less, 5 $\mu$m or more and 40 $\mu$m or less, and 10 $\mu$m or more and 35 $\mu$m or less. Thus, since the conductivity of framework main body 25 can be further increased, the conductivity of porous current collector 20 can be further increased. It should be noted that the thickness of first region R1 can be adjusted by appropriately changing current density and time as electrolysis conditions in the third step of the method of producing the porous body.

In porous current collector 20, the thickness of first region R1 can be found by observing a cross section of the framework with a scanning electron microscope and measuring the region (first region R1) on the outer surface side of framework main body 25. It has been confirmed that there is no variation in measurement result even when a measurement region is freely changed as long as the measurement is performed for the same porous current collector 20 by the above-described method.

(Composition)

The cobalt content ratio in first region R1 is preferably 50 mass% or more. Thus, the spinel structure is facilitated to be formed in first region R1. As a result, first region R1 can have a larger amount of the spinel structure, with the result that the solid oxide fuel cell can have more excellent conductivity. The lower limit of the cobalt content ratio in first region R1 is 55 mass% or more, and more preferably 60 mass% or more. The upper limit of the cobalt content ratio in first region R1 is preferably 90 mass% or less, 80 mass% or less, or 75 mass% or less. The cobalt content ratio in first region R1 is preferably 50 mass% or more and 90 mass% or less, 55 mass% or more and 80 mass% or less, or 60 mass% or more and 75 mass% or less.

The lower limit of the nickel content ratio in first region R1 is preferably 0 mass% or more, 2 mass% or more, and 5 mass% or more. The upper limit of the nickel content ratio in first region R1 is preferably 10 mass% or less, 8 mass% or less, or 7 mass% or less. The nickel content ratio in first region R1 is preferably 0 mass% or more and 10 mass% or less, 2 mass% or more and 8 mass% or less, or 5 mass% or more and 7 mass% or less.

The lower limit of the oxygen content ratio in first region R1 is preferably 10 mass% or more, 20 mass% or more, or 30 mass% or more. The upper limit of the oxygen content ratio in first region R1 is preferably 40 mass% or less, 38 mass% or less, or 36 mass% or less. The oxygen content ratio in first region R1 is preferably 10 mass% or more and 40 mass% or less, 20 mass% or more and 38 mass% or less, or 30 mass% or more and 36 mass% or less.

First region R1 preferably contains 90 mass% or more, 92 mass% or more, or 95 mass% or more of nickel, cobalt, and oxygen in total. First region R1 preferably contains 100 mass% or less, 98 mass% or less, or 96 mass% or less of nickel, cobalt, and oxygen in total. First region R1 preferably contains 90 mass% or more and 100 mass% or less, 92 mass% or more and 98 mass% or less, or 95 mass% or more and 96 mass% or less of nickel, cobalt, and oxygen in total.

Each of the content ratios of nickel, cobalt, and oxygen in first region R1 is found by the following method. That is, each of the content ratios of nickel, cobalt, and oxygen in first region R1 can be found by analyzing the composition of the region (first region R1) on the outer surface side of framework main body 25 in an observation image (electron microscope image) of a cross section of the framework perpendicular to the long-side direction of framework main body 25 by using an EDX apparatus accompanied with a scanning electron microscope (SEM) (for example, SEM part: trade name "SUPRA35VP" provided by Carl Zeiss Microscopy; EDX part: trade name "octane super" provided by AMETEK). It has been confirmed that there is no variation in measurement result even when a measurement region is freely changed as long as the measurement is performed for the same framework main body 25 by the above-described method.

<Second Region>

(Crystal Structure)

Second region R2 has 80 volume% or more of the lamellar rock salt type structure. The thermal expansion coefficient of the oxide having the lamellar rock salt type structure is close to the thermal expansion coefficient of cell 100 for fuel cell. As a result, since the thermal expansion coefficient of porous current collector 20 can be suppressed to be low as a whole, it is possible to suppress the difference in the thermal expansion coefficient from cell 100 for fuel cell, thereby suppressing the occurrence of cracking of cell 100 for fuel cell. Second region R2 preferably has 81 volume% or more, 82 volume% or more, or 85 volume% or more of the lamellar rock salt type structure. Second region R2 preferably has 100 volume% or less, 95 volume% or less, or 90 volume% or less of the lamellar rock salt type structure.

(Thickness)

The ratio of the thickness of second region R2 to the thickness of framework main body 25 is preferably 10% or more and 90% or less. Thus, since the thermal expansion coefficient of porous current collector 20 can be suppressed to be low as a whole, the difference in the thermal expansion coefficient from cell 100 for fuel cell can be suppressed, thereby suppressing the occurrence of cracking of cell 100 for fuel cell. The lower limit of the ratio of the thickness of second region R2 to the thickness of framework main body 25 is preferably 10% or more, 15% or more, or 25% or more. The upper limit of the ratio of the thickness of second region R2 to the thickness of framework main body 25 is preferably 90% or less, 80% or less, or 70% or less. The ratio of the thickness of second region R2 to the thickness of framework main body 25 is preferably 10% or more and 90% or less, 15% or more and 80% or less, or 25% or more and 70% or less. The ratio of the thickness of second region R2 to the thickness of framework main body 25 is found as a percentage of a value obtained by dividing the thickness of second region R2 by the thickness of framework main body 25.

The thickness of second region R2 is preferably 1 $\mu$m or more and 45 $\mu$m or less, 3 $\mu$m or more and 35 $\mu$m or less, or 5 $\mu$m or more and 25 $\mu$m or less. Thus, cracking of cell 100 for fuel cell can be further suppressed in the solid oxide fuel cell. It should be noted that the thickness of second region R2 can be adjusted by appropriately changing current density and time as electrolysis conditions in the second step of the method of producing porous current collector 20.

In porous current collector 20, the thickness of second region R2 is found by calculating the difference between the thickness of framework main body 25 and the thickness of first region R1.

(Composition)

The cobalt content ratio in second region R2 is preferably less than 50 mass%. Thus, the lamellar rock salt type structure is facilitated to be formed in second region R2. As a result, second region R2 can have a larger amount of the lamellar rock salt type structure, thereby further suppressing cracking of cell 100 for fuel cell in the solid oxide fuel cell. The lower limit of the cobalt content ratio in second region R2 is more preferably 10 mass% or more, 20 mass% or more, or 30 mass% or more. The upper limit of the cobalt content ratio in second region R2 is preferably 45 mass% or less, and more preferably 40 mass% or less. The cobalt content ratio in second region R2 is more preferably 10 mass% or more and less than 50 mass%, 20 mass% or more and 45 mass% or less, or 30 mass% or more and 40 mass% or less.

The lower limit of the nickel content ratio in second region R2 is preferably 30 mass% or more, 35 mass% or more, and 40 mass% or more. The upper limit of the nickel content ratio in second region R2 is preferably 90 mass% or less, 80 mass% or less, or 70 mass% or less. The nickel content ratio in second region R2 is preferably 30 mass% or more and 90 mass% or less, 35 mass% or more and 80 mass% or less, or 40 mass% or more and 70 mass% or less.

The lower limit of the oxygen content ratio in second region R2 is preferably 10 mass% or more, 20 mass% or more, or 30 mass% or more. The upper limit of the oxygen content ratio in second region R2 is preferably 40 mass% or less, 38 mass% or less, or 36 mass% or less. The oxygen content ratio in second region R2 is preferably 10 mass% or more and 40 mass% or less, 20 mass% or more and 38 mass% or less, or 30 mass% or more and 36 mass% or less.

Second region R2 preferably contains 90 mass% or more, 92 mass% or more, or 94 mass% or more of nickel, cobalt, and oxygen in total. Second region R2 preferably contains 100 mass% or less, 98 mass% or less, or 96 mass% or less of nickel, cobalt, and oxygen in total. Second region R2 preferably contains 90 mass% or more and 100 mass% or less, 92 mass% or more and 98 mass% or less, and 94 mass% or more and 96 mass% or less of nickel, cobalt, and oxygen in total.

Each of the content ratios of nickel, cobalt, and oxygen in second region R2 is found by the following method. That is, each of the content ratios of nickel, cobalt, and oxygen in framework main body 25 can be found by analyzing the composition in the region (second region R2) on the inner portion 23 side of framework main body 25 in an observation image (electron microscope image) of a cross section of the framework perpendicular to the long-side direction of framework main body 25 by using an EDX apparatus accompanied with a scanning electron microscope (SEM) (for example, SEM part: trade name "SUPRA35VP" provided by Carl Zeiss Microscopy; EDX part: trade name "octane super" provided by AMETEK). It has been confirmed that there is no variation in measurement result even when a measurement region is freely changed as long as the measurement is performed for the same framework main body 25 by the above-described method.

<<Method of Producing Porous Current Collector>>

Porous current collector 20 according to the present embodiment can be produced, for example, by the following method. First, solid oxide fuel cell 150 including porous body 10 according to the first embodiment is obtained. Next, the solid oxide fuel cell is operated under such conditions that an operating temperature is 700 to 900°C and an operating time is 20 to 500 hours. In this way, porous current collector 20 of the third embodiment can be obtained. That is, porous current collector 20 includes second framework 21 having a three-dimensional mesh structure, second framework 21 consists of framework main body 25 and inner portion 23 that is hollow and that is surrounded by framework main body 25, framework main body 25 consists of first region R1 and second region R2, first region R1 is located on the outer surface side of framework main body 25, second region R2 is located on the inner portion 23 side of framework main body 25, framework main body 25 contains 90 mass% or more of nickel, cobalt, and oxygen in total, and first region R1 has 80 volume% or more of the spinel structure, second region R2 has 80 volume% or more of the lamellar rock salt type structure, and the ratio of the thickness of first region R1 to the thickness of framework main body 25 is 10% or more and 90% or less.

[Fourth Embodiment: Solid Oxide Fuel Cell]

A solid oxide fuel cell according to one embodiment of the present disclosure will be described with reference to Fig. 6. Fig. 6 is a schematic cross sectional view showing a solid oxide fuel cell 250 according to one embodiment of the present disclosure. In Fig. 6, solid oxide fuel cell 250 includes a porous current collector 210 for hydrogen electrode, a porous current collector 220 for air electrode, and a cell 100 for fuel cell. Cell 100 for fuel cell is provided between porous current collector 210 for hydrogen electrode and porous current collector 220 for air electrode. Here, "porous current collector 210 for hydrogen electrode" means a porous current collector on a side of supplying hydrogen in the fuel cell. "Porous current collector 220 for air electrode" means a porous current collector on a side of supplying a gas containing oxygen (for example, air) in the fuel cell. In solid oxide fuel cell 250 of the present embodiment, porous current collector 220 for air electrode includes porous current collector 20 of the first embodiment. That is, solid oxide fuel cell 250 of the present embodiment includes porous current collector 20 according to the first embodiment. Thus, it is possible to provide a solid oxide fuel cell in which cell 100 for fuel cell is less likely to be cracked and which has excellent output performance.

Cell 100 for fuel cell can include: an air electrode; a hydrogen electrode; an electrolyte layer provided between the air electrode and the hydrogen electrode; and an intermediate layer provided between the electrolyte layer and the air electrode to prevent reaction therebetween (all not shown). As the air electrode, for example, an oxide of LaSrCo (LSC) is used. As the electrolyte layer, for example, an oxide of Zr doped with Y (YSZ) is used. As the intermediate layer, for example, an oxide of Ce doped with Gd (GDC) is used. As the hydrogen electrode, for example, a mixture of YSZ and $NiO_2$ is used.

In Fig. 6, solid oxide fuel cell 250 further includes a first interconnector 112 having a fuel flow channel 114 and a second interconnector 122 having an oxidant flow channel 124. Fuel flow channel 114 is a flow channel for supplying fuel (for example, hydrogen) to the hydrogen electrode. Fuel flow channel 114 is provided in a main surface of first interconnector 112 facing porous current collector 210 for hydrogen electrode. Oxidant flow channel 124 is a flow channel for supplying an oxidant (for example, oxygen) to the air electrode. Oxidant flow channel 124 is provided in a main surface of second interconnector 122 facing porous cathode current collector 220.

<<Method of Producing Solid Oxide Fuel Cell Including Porous Current Collector>>

Solid oxide fuel cell 250 including porous current collector 20 according to the present embodiment can be produced by appropriately using a known method, except that porous current collector 20 according to the third embodiment is used as porous current collector 220 for air electrode. Therefore, a method of producing solid oxide fuel cell 250 including porous current collector 20 should not be particularly limited except that porous current collector 20 is used.

Examples

Hereinafter, the present disclosure will be specifically described based on examples, but the present invention is not limited to the following examples.

[Example 1]

<<Production of Porous Body>>

In Example 1, each of porous bodies of samples No. 1 to No. 18 was produced in the following manner.

<First Step>

First, a resin-molded body composed of a polyurethane resin (foamed resin) was prepared. Next, a conductive coating material obtained by mixing 20 mass% of acetylene black (conductive particles) and 5 mass% of PVdF (binder) was applied to a surface of the resin-molded body, thereby obtaining a conductive resin-molded body.

<Second Step>

Next, the first nickel-cobalt alloy plating was performed onto the conductive resin-molded body using the following bath composition and electrolysis conditions, thereby obtaining a first porous body precursor.

(Bath Composition)

Salt (aqueous solution): nickel sulfamate (containing 110 g/L of nickel in the plating bath)
Cobalt sulfamate (containing cobalt at the concentration [g/L] described in Table 1 in the plating bath)
Borate: 40 g/L pH: 5
(Electrolysis Conditions)
Temperature: 60°C
Current density: described in Table 1
Anode: insoluble positive electrode
Time: described in Table 1

<Third Step>

Next, the second nickel-cobalt alloy plating was performed onto the first porous body precursor using the following bath composition and electrolysis conditions, thereby obtaining a second porous body precursor.

(Bath Composition)
Salt (aqueous solution): nickel sulfamate (containing 110 g/L of nickel in the plating bath)
Cobalt sulfamate (containing cobalt at the concentration [g/L] described in Table 1 in the plating bath)
Borate: 40 g/L
pH: 5
(Electrolysis Conditions)
Temperature: 60°C
Current density: described in Table 1
Anode: insoluble positive electrode
Time: described in Table 1

<Fourth Step>

Next, the heat treatment was performed onto the second porous body precursor in the atmosphere under the following heat treatment conditions, thereby obtaining the porous body.

(Heat Treatment Conditions)
Temperature: 600°C
Time: 10 minutes

Thus, each of the porous bodies of samples No. 1 to No. 18 was produced.

[Table 1]

| Sample No. | Second Step | | | Third Step | | |
|---|---|---|---|---|---|---|
| | Co Concentration [g/L] | Current Density [A/dm²] | Time [min] | Co Concentration [g/L] | Current Density [A/dm²] | Time [min] |
| 1 | - | - | - | 150 | 5 | 3000 |
| 2 | 10 | 5 | 2.4 | 150 | 5 | 27.60 |
| 3 | 10 | 5 | 3.0 | 150 | 5 | 27.00 |
| 4 | 10 | 5 | 9.0 | 150 | 5 | 21.00 |
| 5 | 10 | 5 | 21.0 | 150 | 5 | 9.00 |
| 6 | 10 | 5 | 27.0 | 150 | 5 | 3.00 |
| 7 | 10 | 5 | 27.6 | 150 | 5 | 2.40 |
| 8 | 10 | 5 | 30.0 | - | - | - |
| 9 | 10 | 10 | 5.5 | 150 | 10 | 3.00 |
| 10 | 10 | 25 | 4.4 | 150 | 20 | 0.75 |
| 11 | 10 | 5 | 21.0 | 95 | 10 | 4.50 |
| 12 | 10 | 5 | 21.0 | 85 | 10 | 4.50 |
| 13 | 18 | 5 | 9.0 | 100 | 5 | 21.00 |
| 14 | 22 | 5 | 9.0 | 100 | 5 | 21.00 |
| 15 | 10 | 8 | 5.5 | 95 | 9 | 5.00 |
| 16 | 10 | 10 | 5.5 | 90 | 9 | 5.00 |
| 17 | 19 | 9 | 6.1 | 150 | 5 | 9.00 |
| 18 | 19 | 7 | 6.8 | 150 | 5 | 9.00 |

[Table 2]

| Sample No. | Framework Main Body | | | | First Layer | | | Second Layer | | |
|---|---|---|---|---|---|---|---|---|---|---|
| | Composition | | | Thickness [μm] | Co Content Ratio [mass%] | Thickness [μm] | Ratio of Thickness [%] | Co Content Ratio [mass%] | Thickness [μm] | Ratio of Thickness [%] |
| | Ni [mass%] | Co [mass%] | Total [mass%] | | | | | | | |
| 1 | 10.0 | 90.0 | 100 | 20 | 90 | 20.0 | 100 | - | 0 | 0 |
| 2 | 15.0 | 85.0 | 100 | 20 | 90 | 18.4 | 92 | 20 | 1.6 | 8 |
| 3 | 17.0 | 83.0 | 100 | 20 | 90 | 18.0 | 90 | 20 | 2.0 | 10 |
| 4 | 31.0 | 69.0 | 100 | 20 | 90 | 14.0 | 70 | 20 | 6.0 | 30 |
| 5 | 59.0 | 41.0 | 100 | 20 | 90 | 6.0 | 30 | 20 | 14.0 | 70 |
| 6 | 73.0 | 27.0 | 100 | 20 | 90 | 2.0 | 10 | 20 | 18.0 | 90 |
| 7 | 74.0 | 26.0 | 100 | 20 | 90 | 1.6 | 8 | 20 | 18.4 | 92 |
| 8 | 80.0 | 20.0 | 100 | 20 | - | 0 | 0 | 20 | 20.0 | 100 |
| 9 | 46.0 | 24.0 | 70 | 20 | 80 | 4.0 | 20 | 10 | 16.0 | 80 |
| 10 | 48.0 | 20.0 | 68 | 20 | 76 | 6.0 | 20 | 5 | 16.0 | 80 |
| 11 | 71.0 | 29.0 | 100 | 20 | 50 | 6.0 | 30 | 20 | 14.0 | 70 |
| 12 | 72.5 | 27.5 | 100 | 20 | 45 | 6.0 | 30 | 20 | 14.0 | 70 |
| 13 | 57.3 | 42.7 | 100 | 20 | 50 | 14.0 | 70 | 49 | 6.0 | 30 |
| 14 | 55.8 | 44.2 | 100 | 20 | 50 | 14.0 | 70 | 54 | 6.0 | 30 |
| 15 | 77.7 | 22.3 | 100 | 20 | 51 | 6.0 | 30 | 10 | 14.0 | 70 |
| 16 | 78.0 | 22.0 | 100 | 20 | 50 | 6.0 | 30 | 10 | 14.0 | 70 |
| 17 | 40.0 | 60.0 | 100 | 20 | 90 | 6.0 | 30 | 47 | 14.0 | 70 |
| 18 | 39.0 | 61.0 | 100 | 20 | 90 | 6.0 | 30 | 49 | 14.0 | 70 |

EP 4 597 648 A1

<<Evaluation on Characteristics of Porous Body>>

<Composition of Framework Main Body of First Framework>

For each of the porous bodies of samples No. 1 to No. 18, the composition of the framework main body of the first framework was found by the method described in the first embodiment. The obtained results are shown in the column "Ni [mass%]", the column "Co [mass%]", and the column "Total [mass%]" in Table 2.

<Thickness of Framework Main Body of First Framework, Thickness of First Layer, and Thickness of Second Layer>

For each of the porous bodies of samples No. 1 to No. 18, the thickness of the framework main body of the first framework was found by the method described in the first embodiment. The obtained results are shown in the column "Thickness [$\mu$m]" in the column "Framework Main Body" in Table 2. Moreover, for each of the porous bodies of samples No. 1 to No. 18, the thickness of the first layer was found by the method described in the first embodiment. The obtained results are shown in the column "Thickness [$\mu$m]" in the column "First Layer" in Table 2. Moreover, for each of the porous bodies of samples No. 1 to No. 18, the thickness of the second layer was found by the method described in the first embodiment. The obtained results are shown in the column "Thickness [$\mu$m]" in the column "Second Layer" in Table 2. The ratio of the thickness of the first layer to the thickness of the framework main body of the first framework was found by the method described in the first embodiment. The obtained results are shown in the column "Ratio of Thickness [%]" in the column "First Layer" in Table 2. The ratio of the thickness of the second layer to the thickness of the framework main body of the first framework was found by the method described in the first embodiment. The obtained results are shown in the column "Ratio of Thickness [%]" in the column "Second Layer" in Table 2.

<Cobalt Content Ratio in First Layer and Cobalt Content Ratio in Second Layer>

For each of the porous bodies of samples No. 1 to No. 18, the cobalt content ratio in the first layer was found by the method described in the first embodiment. The obtained results are shown in the column "Co Content [mass%]" in the column "First Layer" in Table 2. For each of the porous bodies of samples No. 1 to No. 18, the cobalt content ratio in the second layer was found by the method described in the first embodiment. The obtained results are shown in the column "Co Content [mass%]" in the column "Second Layer" in Table 2.

[Example 2]

<<Production of Porous Current Collector>>

In Example 2, each of porous current collectors of samples No. 101 to No. 118 was produced in the following manner.
First, each of solid oxide fuel cells including the porous bodies of samples No. 1 to No. 18 was obtained by using a corresponding one of the porous bodies (porous body for air electrode) of samples No. 1 to No. 18, a Ni mesh (porous body for hydrogen electrode) provided by Nilaco Corporation, a "YSZ cell" (trademark), which is a cell provided by Elcogen, and an interconnector. Next, the solid oxide fuel cell was operated under such conditions that an operating temperature was 730°C and an operating time was 24 hours, thereby producing the solid oxide fuel cells including the porous current collectors of samples No. 101 to No. 118.

<<Evaluation on Characteristics of Porous Current Collector>>

<Composition of Framework Main Body of Second Framework>

For each of the porous current collectors of samples No. 101 to No. 118, the composition of the framework main body of the second framework was found by the method described in the third embodiment. The obtained results are shown in the column "Ni [mass%]" in Table 3, the column "Co [mass%]" in Table 3, the column "O [mass%]" in Table 3, and the column "Total [mass%]" in Table 3.

<Cobalt Content Ratio in First Region R1 and Cobalt Content Ratio in Second Region R2>

For each of the porous current collectors of samples No. 101 to No. 118, the cobalt content ratio in first region R1 was found by the method described in the third embodiment. The obtained results are shown in the column "Co Content [mass%]" in the column "First Region R1" in Table 4. For each of the porous current collectors of samples No. 101 to No.

118, the cobalt content ratio in second region R2 was found by the method described in the third embodiment. The obtained results are shown in the column "Co Content [mass%]" in the column "Second Region R2" in Table 4.

<Thickness of Framework Main Body of Second Framework, Thickness of First Region R1, and Thickness of Second Region R2>

For each of the porous current collectors of samples No. 101 to No. 118, the thickness of the framework main body of the second framework was found by the method described in the third embodiment. The obtained results are shown in the column "Thickness [μm]" in the column "Framework Main Body" in Table 3. For each of the porous current collectors of samples No. 101 to No. 118, the thickness of first region R1 was found by the method described in the third embodiment. The obtained results are shown in the column "Thickness [μm]" in the column "First Region R1" in Table 4. For each of the porous current collectors of samples No. 101 to No. 118, the thickness of second region R2 was found by the method described in the third embodiment. The obtained results are shown in the column "Thickness [μm]" in the column "Second Region R2" in Table 4. For each of the porous current collectors of samples No. 101 to No. 118, the ratio of the thickness of first region R1 to the thickness of the framework main body was found by the method described in the third embodiment. The obtained results are shown in the column "Ratio of Thickness [%]" in the column "First Region R1" in Table 4. For each of the porous current collectors of samples No. 101 to No. 118, the ratio of the thickness of second region R2 to the thickness of the framework main body was found by the method described in the third embodiment. The obtained results are shown in the column "Ratio of Thickness [%]" in the column "Second Region R2" in Table 4.

<Ratio of Spinel Structure in First Region R1 and Ratio of Lamellar Rock Salt Type Structure in Second Region R2>

For each of the porous current collectors of samples No. 101 to No. 118, the ratio of the spinel structure of first region R1 was found by the method described in the third embodiment. The obtained results are shown in the column "Ratio of Spinel Structure [volume%]" in the column "First Region R1" in Table 4. For each of the porous current collectors of samples No. 101 to No. 118, the ratio of the lamellar rock salt type structure in second region R2 was found by the method described in the third embodiment. The obtained results are shown in the column "Ratio of Lamellar Rock Salt Type Structure [volume%]" in the column "Second Region R2" in Table 4.

<Conductivity of Porous Current Collector>

For each of the porous current collectors of samples No. 101 to No. 118, an area specific resistance was measured by the following method so as to evaluate the conductivity of each porous current collector. It should be noted that the low area specific resistance of the porous current collector means that the conductivity of the porous current collector is high.

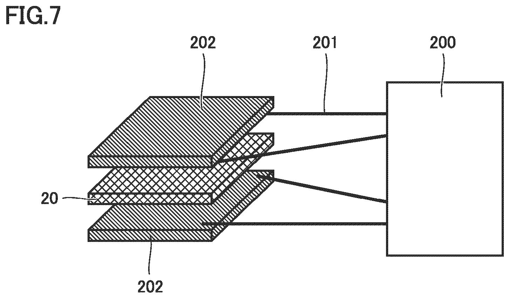

The porous current collector was sandwiched from beside both the first main surface side and the second main surface side by two interconnector-simulated plates 202 connected to a resistance measurement device 200 (trademark: AC mΩ Meter 356E; provided by Tsuruga Electric Corporation) by platinum wires 201 for electric conduction (Fig. 7). Next, interconnector-simulated plates 202 and the porous current collector were each increased in temperature to 800°C in a thermostatic oven, and the area specific resistance thereof was measured by a four-terminal method. The obtained results are shown in the column "Area Specific Resistance [mΩ·cm$^2$]" in Table 5.

Each of the porous current collectors of samples No. 103 to 106, 109, 111, 113 and 115 to 118 corresponds to an example of the present disclosure. On the other hand, each of the porous current collectors of samples No. 101, 102, 107, 108, 110 and 112 and 114 correspond to a comparative example. Each of the porous current collectors of samples No. 103 to 106, 109, 111, 113 and 115 to 118 has much more excellent conductivity than that of each of the porous current collectors of samples No. 107, 108, 110, and 112 of the comparative examples. Further, the high conductivity of the porous current collector means that the output performance of the solid oxide fuel cell including the porous current collector is high. Therefore, the expression "each of the porous current collectors of samples No. 103 to 106, 109, 111, 113 and 115 to 118 has much more excellent conductivity than that of each of the porous current collectors of samples No. 107, 108, 110, and 112 of the comparative examples" means "each of the solid oxide fuel cells including the porous current collectors of samples No. 103 to 106, 109, 111, 113 and 115 to 118 has much more excellent output performance than that of each of the solid oxide fuel cells including the porous current collectors of samples No. 107, 108, 110, and 112 of the comparative examples".

<Heat Shock Test>

Each of the solid oxide fuel cells including the porous current collectors of samples No. 101 to No. 118 subjected to the evaluation on the "Conductivity of Porous Current Collector" was held under an environment of 700°C for 200 hours.

Next, increase and decrease in the temperature were repeated 30 times in a range of 100°C to 700°C. Next, the output performance [mW/cm$^2$] of the solid oxide fuel cell and the presence or absence of cracking of the cell were evaluated. It should be noted that the output performance [mW/cm$^2$] of the solid oxide fuel cell was found by measuring the maximum output when the current density was changed from 0 to 500 mA/cm$^2$. The obtained results of the output performance [mW/cm$^2$] are shown in the column "Output Performance [mW/cm$^2$]" in Table 5. The obtained evaluation results of the presence or absence of cracking of the cell are shown in the column "Presence or Absence of Cracking of Cell" in Table 5. It should be noted that "-" in the column "Output Performance [mW/cm$^2$]" means "Unmeasurable". A reason why it is "unmeasurable" is indicated in parentheses in the column "Output Performance [mW/cm$^2$]".

Each of the porous current collectors of samples No. 103 to 106, 109, 111, 113 and 115 to 118 exhibits a particularly excellent effect of suppressing cracking of the cell in the solid oxide fuel cell as compared with each of the porous current collectors of samples No. 101, 102, and 114. Moreover, each of the porous current collectors of samples No. 103 to 106, 109, 111, 113 and 115 to 118 exhibits excellent output performance even in a heat shock test (i.e., under severe conditions).

[Table 3]

| Sample No. | Porous Body | Framework Main Body | | | | |
| | | Composition | | | | Thickness [μm] |
| | | Ni [mass%] | Co [mass%] | O [mass%] | Total [mass%] | |
|---|---|---|---|---|---|---|
| 101 | Sample 1 | 8.2 | 74.0 | 17.8 | 100 | 34.0 |
| 102 | Sample 2 | 12.3 | 70.0 | 17.7 | 100 | 34.0 |
| 103 | Sample 3 | 14.0 | 69.0 | 17.0 | 100 | 34.0 |
| 104 | Sample 4 | 26.0 | 58.0 | 16.0 | 100 | 34.0 |
| 105 | Sample 5 | 50.0 | 35.0 | 15.0 | 100 | 34.0 |
| 106 | Sample 6 | 63.0 | 23.0 | 14.0 | 100 | 34.0 |
| 107 | Sample 7 | 64.0 | 22.0 | 14.0 | 100 | 34.0 |
| 108 | Sample 8 | 70.0 | 16.0 | 14.0 | 100 | 34.0 |
| 109 | Sample 9 | 51.0 | 25.0 | 14.0 | 90 | 34.0 |
| 110 | Sample 10 | 41.0 | 25.0 | 14.0 | 80 | 34.0 |
| 111 | Sample 11 | 63.0 | 25.0 | 12.0 | 100 | 34.0 |
| 112 | Sample 12 | 64.0 | 24.0 | 12.0 | 100 | 34.0 |
| 113 | Sample 13 | 49.0 | 36.0 | 15.0 | 100 | 34.0 |
| 114 | Sample 14 | 47.0 | 37.0 | 16.0 | 100 | 34.0 |
| 115 | Sample 15 | 69.0 | 19.0 | 12.0 | 100 | 34.0 |
| 116 | Sample 16 | 70.0 | 18.0 | 12.0 | 100 | 34.0 |
| 117 | Sample 17 | 34.0 | 50.0 | 16.0 | 100 | 34.0 |
| 118 | Sample 18 | 33.0 | 51.0 | 16.0 | 100 | 34.0 |

[Table 4]

| Sample No. | First Region R1 | | | | Second Region R2 | | | |
| | Co Content Ratio [mass%] | Thickness [μm] | Ratio of Thickness [%] | Ratio of Spinel Structure [volume%] | Co Content Ratio [mass%] | Thickness [μm] | Ratio of Thickness [%] | Ratio of Lamellar Rock Salt Type Structure [volume%] |
|---|---|---|---|---|---|---|---|---|
| 101 | 70 | 34.0 | 100 | 90 | - | 0 | 0 | - |
| 102 | 70 | 31.3 | 92 | 90 | 16 | 2.7 | 8 | 90 |

(continued)

| Sample No. | First Region R1 | | | | Second Region R2 | | | |
|---|---|---|---|---|---|---|---|---|
| | Co Content Ratio [mass%] | Thickness [μm] | Ratio of Thickness [%] | Ratio of Spinel Structure [volume%] | Co Content Ratio [mass%] | Thickness [μm] | Ratio of Thickness [%] | Ratio of Lamellar Rock Salt Type Structure [volume%] |
| 103 | 70 | 30.6 | 90 | 90 | 16 | 3.4 | 10 | 89 |
| 104 | 70 | 24.0 | 70 | 90 | 16 | 10.0 | 30 | 88 |
| 105 | 70 | 10.0 | 30 | 90 | 16 | 24.0 | 70 | 87 |
| 106 | 70 | 3.4 | 10 | 90 | 16 | 30.6 | 90 | 85 |
| 107 | 70 | 2.7 | 8 | 90 | 16 | 31.3 | 92 | 85 |
| 108 | - | 0 | 0 | - | 16 | 34.0 | 100 | 82 |
| 109 | 60 | 6.8 | 20 | 90 | 8 | 27.0 | 80 | 81 |
| 110 | 56 | 6.8 | 20 | 80 | 4 | 27.0 | 80 | 81 |
| 111 | 56 | 10.0 | 30 | 80 | 16 | 24.0 | 70 | 90 |
| 112 | 52 | 10.0 | 30 | 75 | 16 | 24.0 | 70 | 90 |
| 113 | 70 | 24.0 | 70 | 90 | 38 | 10.0 | 30 | 80 |
| 114 | 70 | 24.0 | 70 | 90 | 42 | 10.0 | 30 | 75 |
| 115 | 50 | 6.8 | 30 | 90 | 8 | 27.0 | 70 | 81 |
| 116 | 48 | 6.8 | 30 | 80 | 8 | 27.0 | 70 | 81 |
| 117 | 70 | 3.4 | 30 | 90 | 49 | 30.6 | 70 | 90 |
| 118 | 70 | 10.2 | 30 | 90 | 52 | 23.8 | 70 | 80 |

[Table 5]

| Sample No. | Area specific resistance [mΩ·cm$^2$] | Heat Shock Test | |
|---|---|---|---|
| | | Presence or Absence of Cracking of Cell | Output Performance [mW/cm$^2$] |
| 101 | 37 | Present | - (Occurrence of Cracking) |
| 102 | 40 | Present | - (Occurrence of Cracking) |
| 103 | 42 | Absent | 450 |
| 104 | 62 | Absent | 446 |
| 105 | 125 | Absent | 434 |
| 106 | 190 | Absent | 420 |
| 107 | 1230 | Absent | 212 |
| 108 | 7680 | Absent | - (High Resistance) |
| 109 | 180 | Absent | 428 |
| 110 | 685 | Absent | 296 |
| 111 | 215 | Absent | 405 |
| 112 | 468 | Absent | 343 |
| 113 | 60 | Absent | 447 |
| 114 | 58 | Present | - (Occurrence of Cracking) |

(continued)

| Sample No. | Area specific resistance [m$\Omega \cdot$cm$^2$] | Heat Shock Test | |
| --- | --- | --- | --- |
| | | Presence or Absence of Cracking of Cell | Output Performance [mW/cm$^2$] |
| 115 | 223 | Absent | 401 |
| 116 | 356 | Absent | 400 |
| 117 | 154 | Absent | 420 |
| 118 | 153 | Absent | 430 |

In view of the above, it was found that each of the porous current collectors of samples No. 103 to 106, 109, 111, 113 and 115 to 118 allows for suppression of cracking of the cell for fuel cell in the solid oxide fuel cell and has excellent conductivity. Moreover, it was found that the cell for fuel cell is less likely to be cracked and excellent output performance can be attained in each of the solid oxide fuel cells including the porous current collectors of samples No. 103 to 106, 109, 111, 113 and 115 to 118.

Although the embodiments and examples of the present invention have been described as described above, it is also initially expected to appropriately combine the configurations of the above-described embodiments and examples.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

REFERENCE SIGNS LIST

10 porous body; 11 first framework; 12 first layer; 13 inner portion; 14 pore portion; 15 framework main body; 16 second layer; 20 porous current collector; 21 second framework; 23 inner portion; 24 pore portion; 25 framework main body; 100 cell for fuel cell; 110 porous body for hydrogen electrode; 112 first interconnector; 114 fuel flow channel; 120 porous body for air electrode; 122 second interconnector; 124 oxidant flow channel; 150 solid oxide fuel cell including porous body; 200 resistance measurement device; 201 platinum wire; 202 interconnector-simulated plate; 210 porous current collector for hydrogen electrode; 220 porous current collector for air electrode; 250 solid oxide fuel cell including porous current collector; R1 first region; R2 second region.

**Claims**

1. A porous body comprising a first framework having a three-dimensional mesh structure, wherein

   the first framework consists of a framework main body and an inner portion that is hollow and that is surrounded by the framework main body,
   the framework main body consists of a first layer and a second layer,
   the first layer is located on an outer surface side of the framework main body,
   the second layer is located on the inner portion side of the framework main body,
   the framework main body contains 70 mass% or more of nickel and cobalt in total,
   a cobalt content ratio in the first layer is 50 mass% or more,
   a cobalt content ratio in the second layer is less than 50 mass%, and
   a ratio of a thickness of the first layer to a thickness of the framework main body is 10% or more and 90% or less.

2. A solid oxide fuel cell comprising the porous body according to claim 1.

3. A porous current collector comprising a second framework having a three-dimensional mesh structure, wherein

   the second framework consists of a framework main body and an inner portion that is hollow and that is surrounded by the framework main body,
   the framework main body consists of a first region and a second region,
   the first region is located on an outer surface side of the framework main body,
   the second region is located on the inner portion side of the framework main body,
   the framework main body contains 90 mass% or more of nickel, cobalt, and oxygen in total,

the first region has 80 volume% or more of a spinel structure,
the second region has 80 volume% or more of a lamellar rock salt type structure, and
a ratio of a thickness of the first region to a thickness of the framework main body is 10% or more and 90% or less.

4. The porous current collector according to claim 3, wherein

a cobalt content ratio in the first region is 50 mass% or more, and
a cobalt content ratio in the second region is less than 50 mass%.

5. A solid oxide fuel cell comprising the porous current collector according to claim 3 or 4.

FIG.1

FIG.2

FIG.3

20

FIG.4

FIG.5

FIG.6

FIG.7

## INTERNATIONAL SEARCH REPORT

International application No.

**PCT/JP2023/023101**

### A. CLASSIFICATION OF SUBJECT MATTER

*H01M 8/0245*(2016.01)i; *H01M 4/86*(2006.01)i; *H01M 8/0232*(2016.01)i; *H01M 8/0236*(2016.01)i; *H01M 8/12*(2016.01)i
FI:   H01M8/0245; H01M4/86 B; H01M4/86 M; H01M8/0232; H01M8/0236; H01M8/12 101

According to International Patent Classification (IPC) or to both national classification and IPC

### B. FIELDS SEARCHED

Minimum documentation searched (classification system followed by classification symbols)

H01M8/0245; H01M4/86; H01M8/0232; H01M8/0236; H01M8/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/244480 A1 (SUMITOMO ELECTRIC INDUSTRIES, LTD.) 26 December 2019 (2019-12-26) entire text, all drawings | 1-5 |
| A | WO 2021/130849 A1 (SUMITOMO ELECTRIC INDUSTRIES, LTD.) 01 July 2021 (2021-07-01) claims | 1-5 |
| A | WO 2020/235265 A1 (SUMITOMO ELECTRIC INDUSTRIES, LTD.) 26 November 2020 (2020-11-26) claims | 1-5 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **25 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/023101**

| Patent document cited in search report | Publication date (day/month/year) | Patent family member(s) | Publication date (day/month/year) |
|---|---|---|---|
| WO 2019/244480 A1 | 26 December 2019 | US 2020/0350600 A1<br>entire text, all drawings<br>EP 3812476 A1<br>CN 110856447 A<br>KR 10-2021-0021891 A | |
| WO 2021/130849 A1 | 01 July 2021 | US 2023/0099013 A1<br>claims<br>EP 3940097 A1<br>CN 113383100 A<br>KR 10-2022-0115832 A | |
| WO 2020/235265 A1 | 26 November 2020 | US 2021/0175520 A1<br>claims<br>EP 3795705 A1<br>CN 112313355 A<br>KR 10-2022-0012779 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022155330 A

- JP 2017507452 A